# EUROPEAN PATENT APPLICATION

(11) **EP 1 377 074 A2**
(43) Date of publication of application: **02.01.2004**
(21) Application number: 03007319.1
(22) Date of filing: 31.03.2003
(51) Int. Cl.: H04N 9/31

(54) **Image display apparatus having optical scanner**

(30) Priority: 20.06.2002 KR 2002034647
(71) Applicant: SAMSUNG ELECTRONICS CO., LTD., Suwon-City, Kyungki-do (KR)
(72) Inventor: Hwang, Ju-Seong, Cheonan-si, Chungcheongnam-do (KR)
(74) Representative: Grünecker, Kinkeldey, Stockmair & Schwanhäusser Anwaltssozietät

(57) **Abstract**

An image display apparatus having an optical scanner is provided. The image display apparatus includes: an illumination optical system to emit a beam; a spectrometer that separates the beam emitted from the illumination optical system by reflecting and diffracting the beam at different diffraction angles according to a wavelength of the beam while seesawing back and forth for a predetermined angle with respect to a rotational axis; a relay lens system that converts beams separated by the spectrometer into parallel beams; an image optical system that produces an image from the beams incident from the relay lens system; and a projection optical system that projects the beams reflected by the image optical system onto a screen. In the apparatus, the beam is reflected and diffracted at different diffraction angles so that each beam corresponds on a one-to-one basis to each scanning line of the panel, thereby allowing a display of full-size, high brightness, and high resolution image using a single panel.

## Description

### BACKGROUND OF THE INVENTION

This application claims the priority of Korean Patent Application No. 2002-34647, filed June 20, 2002 in the Korean Intellectual Property Office, which is incorporated herein in its entirety by reference.

### 1. Field of the Invention

The present invention relates to an image display apparatus, and more particularly, to a single-panel color image display apparatus using a single display device for producing an image according to image signals input thereto, and capable of achieving the same optical efficiency and resolution as a three-panel color image display apparatus using three display devices.

### 2. Description of the Related Art

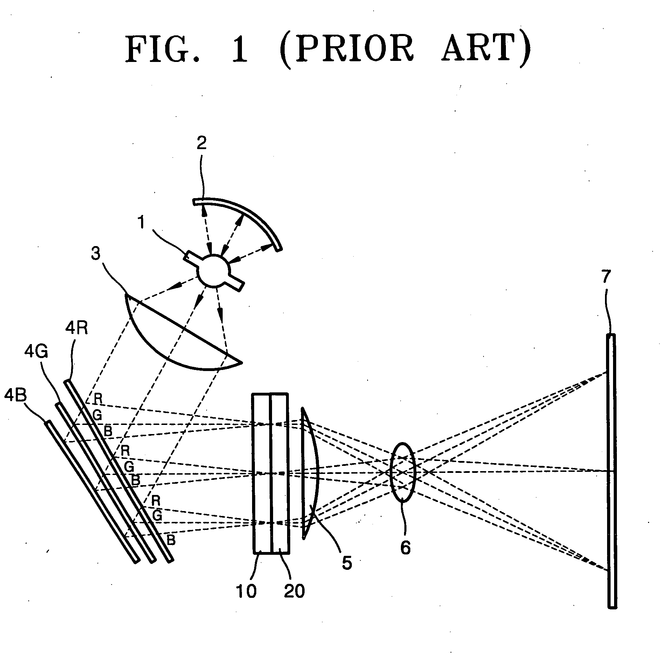

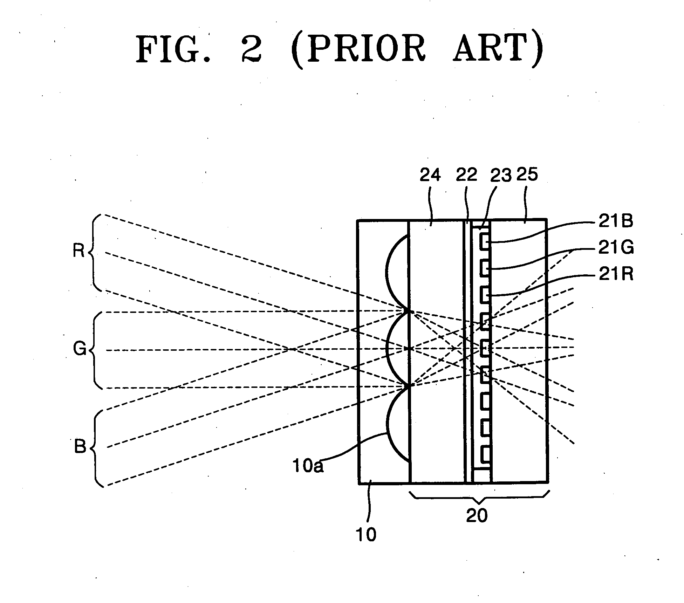

FIG. 1 shows an example of a conventional single-panel color image display apparatus, and FIG. 2 shows optical paths in the micro-lens array and liquid crystal display (LCD) of FIG. 1. Referring to FIGS. 1 and 2, the conventional single-panel color image display apparatus includes an illumination optical system, three dichroic mirrors 4R, 4G, and 4B, tilted with respect to each other, a micro-lens array 10, and an LCD 20. The illumination optical system includes a lamp 1, which is a white light source, a spherical mirror 2 disposed to surround one side of the lamp 1, and a condenser lens 3 that collects a divergent beam emitted from the lamp 1 and a divergent beam reflected by the spherical mirror 2 and converts the divergent beams into collimating beams.

The white light emitted by the illumination optical system is separated by the three dichroic mirrors 4R, 4G, and 4B into three primary color beams: red (R), green (G), blue (B) beams. The dichroic mirror 4R reflects the red beam of white light coming from the illumination optical system and transmits the remaining color beams. The dichroic mirror 4G reflects the green (G) beam among the color beams transmitted through the dichroic mirror 4R and transmits the remaining color beam, i.e., the blue (B) beam. The dichroic mirror 4B reflects the blue (B) beam.

The three dichroic mirrors 4R, 4G, and 4B are inclined with respect to each other with an angle of θ, thus forming a fan shape. In other words, the dichroic mirrors 4R and 4B are tilted with respect to the dichroic mirror 4B with angles of -θ and + θ, respectively. Here, + and - signs denote clockwise and counterclockwise directions.

Thus, main rays of the red (R) and blue (B) beams are incident onto the micro-lens array 10 at angles of -θ and + θ relative to a main ray of the green (G) beam. The micro-lens array 10 consists of a plurality of cylindrical micro-lens units 10a arranged horizontally. The micro-lens array 10 converges the red (R), green (G), and blue (B) beams incident at different angles onto signal electrodes 21 R, 21 G, and 21 B of the LCD 20 in a stripe pattern.

The LCD 20 is constructed of a liquid crystal layer 23 sandwiched between two sheets of transparent glass substrates 24 and 25. The liquid crystal layer 23 has a transparent conductive layer 22 and the signal electrodes 21 R, 21 G, and 21 B are formed on either side of the conductive layer 22 in a matrix structure.

In the conventional single-panel color image display apparatus configured as above, the white light coming from the illumination optical system is separated into three primary colors by the three dichroic mirrors 4R, 4G, and 4B and converged onto the signal electrodes 21 R, 21 G, and 21 B of the LCD 20, respectively. The signal electrodes 21 R, 21 G, and 21 B are arranged horizontally at regular intervals due to difference in angles at which the main rays of the red (R), green (G), and blue (B) beams are incident. The signal electrodes 21 R, 21 G, and 21 B are combined into a single image pixel, each serving as a sub-pixel.

As described above, each micro-lens unit 10a corresponds to three sub-pixels of the primary colors of red (R), green (G), and blue (B). The three sub-pixels are displayed as a single image pixel, on a screen 7 which allows a viewer to see a color image composed of a plurality of image pixels.

However, the conventional single-panel color image display apparatus described above is configured so that the three sub-pixels constitute a single image pixel, thereby lowering a resolution of the LCD 20 to 1/3. For example, the LCD 20 needs to have a physical resolution three times larger than it actually has in order to obtain the same resolution as a projection single-panel image display apparatus using a color wheel as disclosed in U.S. Patent No. 5,633,755 or 5,159,485.

If the physical resolution of the LCD 20 is increased three times as described above, the aperture ratio decreases to reduce optical efficiency. A reduced optical efficiency lowers yield and increases the manufacturing cost. Additionally, the size of the LCD 20 may be increased in order to increase its physical resolution three times. Nevertheless, as the size of the LCD 20 increases, the size of the condenser lens 3, field lens 5, or projection lens 6 increases, thereby driving up the manufacturing cost.

### SUMMARY OF THE INVENTION

The present invention provides a projection single-panel color image display apparatus having a compact structure, low price, high brightness, high resolution, and high optical efficiency compared with a three-panel color image display apparatus.

According to an aspect of the present invention, there is provided an image display apparatus including: an illumination optical system to emit a beam; a spectrometer that separates the beam emitted from the illumination optical system by reflecting and diffracting the beam at different diffraction angles depending on a wavelength while seesawing back and forth at a predetermined angle with respect to a rotational axis; a relay lens system that converts the beams separated by the spectrometer into parallel beams; an image optical system that produces an image from the beams incident from the relay lens system; and a projection optical system that projects the beams reflected by the image optical system onto a screen.

Here, the spectrometer is an optical scanner that reflects and diffracts the beam coming from the illumination optical system according to a wavelength of the beam. Alternatively, the spectrometer may consist of a plurality of optical scanners arranged in an array and sequentially driven by a vertical synchronization signal.

The optical scanner may have on its surface a hologram layer that separates the beam coming from the illumination optical system by reflecting and diffracting the beam according to its wavelength. Preferably, the hologram layer is a reflective type hologram layer.

The optical scanner may have on its surface a diffraction grating layer that separates the beam incident from the illumination optical system by reflecting and diffracting the beam according to its wavelength. The illumination optical system may be driven so as not to emit any beam during a return time when the spectrometer is returned to its original position. The time it takes for the spectrometer to return to its original position may be set as approximately one-tenth (1/10) of period T.

Here, the illumination optical system includes: a plurality of light sources to emit a plurality of color beams including red, green, and blue beams; a color filter disposed in front of the plurality of light sources to make the plurality of color beams propagate along a common axis in order to produce white light; and a collimator lens that converges the white light onto the spectrometer.

Each of the plurality of light sources is a light-emitting diode (LED), laser diode(LD), or an arc lamp.

The relay lens system includes a collimator lens that makes beams reflected from the spectrometer parallel to an optical axis; a fly lens that makes the beams passing through the collimator lens correspond on a one-to-one basis to the image optical system; and a field lens that converts the beam passing through the fly lens into parallel beams. The fly lens has two lenslets provided for each optical scanner. Here, the image optical system includes: a panel that modulates the beam passing through the relay lens system and produces an image; and an optical path splitting unit disposed between optical paths of the relay lens system and the panel in order to direct the beam coming from the relay lens system to the panel while directing the beam reflected off the panel to the projection optical system.

The image display apparatus according to this invention is configured to have a spectrometer, to reflect and diffract the beams according to beams' wavelengths between the illumination optical system and the relay lens system. The white light is separated by the spectrometer into different color beams and the resultant beams are mapped on a one-to-one correspondence to a single panel, thereby providing a full-size color image. The present invention makes it possible to offer a low priced, high brightness, and high resolution projection single-plate color image display apparatus.

### BRIEF DESCRIPTION OF THE DRAWINGS

The above aspects and advantages of the present invention will become more apparent by describing in detail preferred embodiments thereof with reference to the attached drawings in which:
FIG. 1 shows an example of a conventional single-plate color image display apparatus;
FIG. 2 shows optical paths in the micro-lens array and liquid crystal display (LCD) of FIG. 1;
FIG. 3 shows the configuration of an image display apparatus according to an embodiment of the present invention;
FIG. 4 is a perspective view of an optical scanner used in the image display apparatus of FIG. 3, according to the embodiment of the present invention;
FIG. 5A is a graph illustrating a first method of driving an optical scanner, according to the embodiment of the present invention;
FIG. 5B shows vertical scanning performed by the first method of driving an optical scanner, according to the embodiment of the present invention;
FIG. 6A is a graph illustrating a second method of driving an optical scanner, according to the embodiment of the present invention;
FIG. 6B shows vertical scanning performed by the second method of driving an optical scanner, according to the embodiment of the present invention; and
FIG. 7 shows the configuration of an image display apparatus according to another embodiment of the present invention.

### DETAILED DESCRIPTION OF THE INVENTION

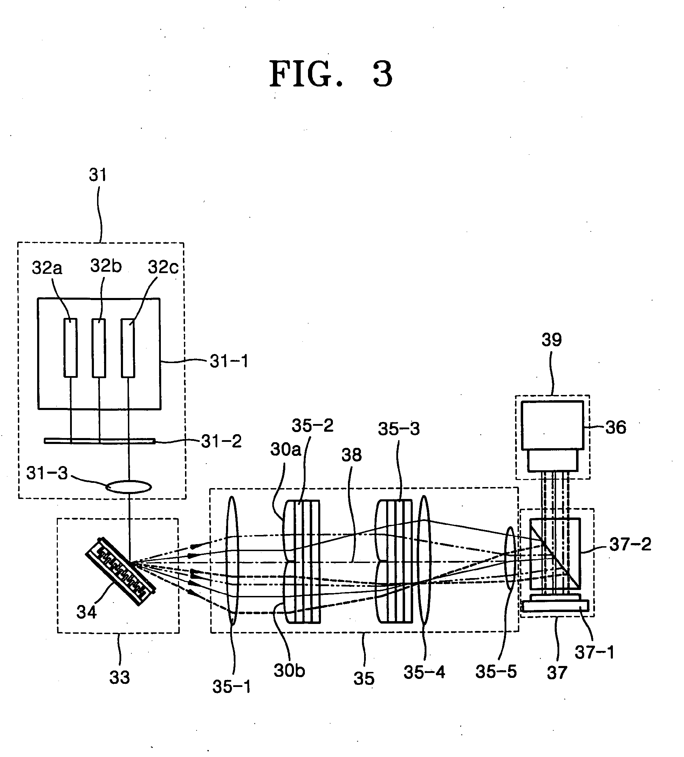

Referring to FIG. 3, a single-panel color image display apparatus according to an embodiment of the present invention includes: an illumination optical system 31 that emits beams; a spectrometer 33 that separates the beams by reflecting and diffracting beams coming from the illumination optical system 31 at different diffraction angles according to beams' wavelength while periodically rotating back and forth for specific angles with respect to a rotational axis; a relay lens system 35 that converts the beams separated by the spectrometer 33 into parallel beams; an image optical system 37 that performs modulation on the incident beams from the relay lens system 35 and produces an image; and a projection optical system 39 that projects the beams reflected off the image optical system 37 onto a screen (not shown).

The illumination optical system 31 consists of a plurality of light sources 31-1 to emit color beams including red, green, and blue ones, a color filter 31-2 positioned in front of the plurality of light sources 31-1 and designed so that the color beams propagate along a common axis and are combined to produce white light, and a collimating lens 31-3 that converges the white light onto the spectrometer 33. Here, it is preferable that the plurality of light sources 31-1 are three individual light-emitting devices 32a, 32b, and 32c such as light emitting diodes (LEDs) or laser diodes (LDs).

The color filter 31-2 changes optical paths of two color beams among red, green, and blue beams incident parallel to each other along different optical paths to an optical path of the remaining beam and produces white light so that the three beams propagate along the same optical path. A dichroic X, cross prism, or Total International Reflection (TIR) prism serving for the same purpose as the color filter 31-2 may be used as a color separation/combination system in place of the color filter 31-2.

The collimating lens 31-3 converges the white light coming from the color filter 31-2 onto the spectrometer 33. The spectrometer 33 consists of an optical scanner 34 having on its surface a hologram layer or diffraction grating layer for reflecting and diffracting the beam incident from the condensing lens 31-3 according to the beam's wavelength. The optical scanner 34 diffracts and reflects the beam while periodically rotating back and forth for predetermined angles as a result of driving signals and separtes the beam according to its wavelength.

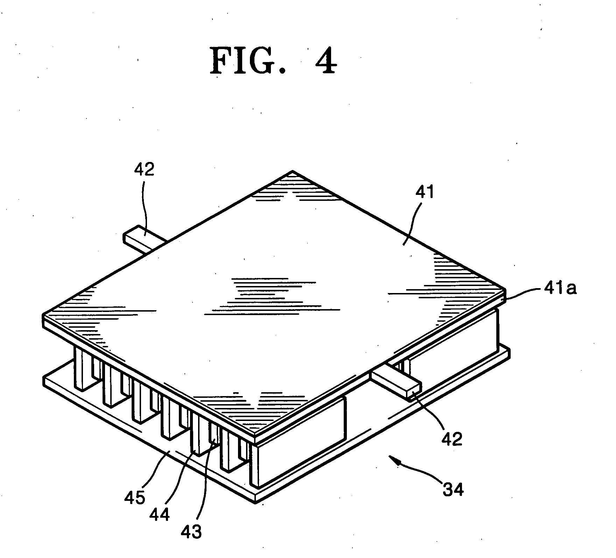

FIG. 4 shows the optical scanner 34 used in the color image display apparatus according to an embodiment of the present invention. Referring to FIG. 4, the optical scanner 34 may include a substrate 45, a stage 41 a disposed above the substrate 45, a pair of rotational axes 42 connected to either side of the stage 41 a, driving comb electrodes 43 arranged in parallel on the bottom of the stage 41a, and fixed comb electrodes 44 arranged alternately in parallel to the driving comb electrodes 43 on the substrate 45. A hologram layer 41 is placed on the stage 41 a. In this case, a diffraction grating layer having a large number of grooves or slits cut in the surface may be formed in place of the hologram layer 41.

The stage 41 a seesaws back and forth with a predetermined angle φ relative to the pair of rotational axes 42 provided on either side of the stage. Angle φ represents the maximum slope angle due to an electrostatic attractive force (also called "Coulomb force") between the driving comb electrodes 43 and the fixed comb electrodes 44. That is, if an attractive force is exerted between the driving comb electrodes 43 and the fixed comb electrodes 44 disposed on the left side with respect to the pair of rotational axes 42, the stage 41 a is tilted to the left. In contrast, if an attractive force is exerted between the driving comb electrodes 43 and the fixed comb electrodes 44 disposed on the right side, the stage 41 a is tilted to the right. To repeatedly induce a seesaw motion, a voltage is repeatedly applied between the driving comb electrodes 43 and the fixed comb electrodes 44 disposed on the left and right sides to alternately produce the electrostatic attractive force. Here, the stage 41 a may be driven at a maximum slope angle φ of approximately between 8 and 10 degrees, while the optical scanner may scan at a vertical scanning speed of 60Hz.

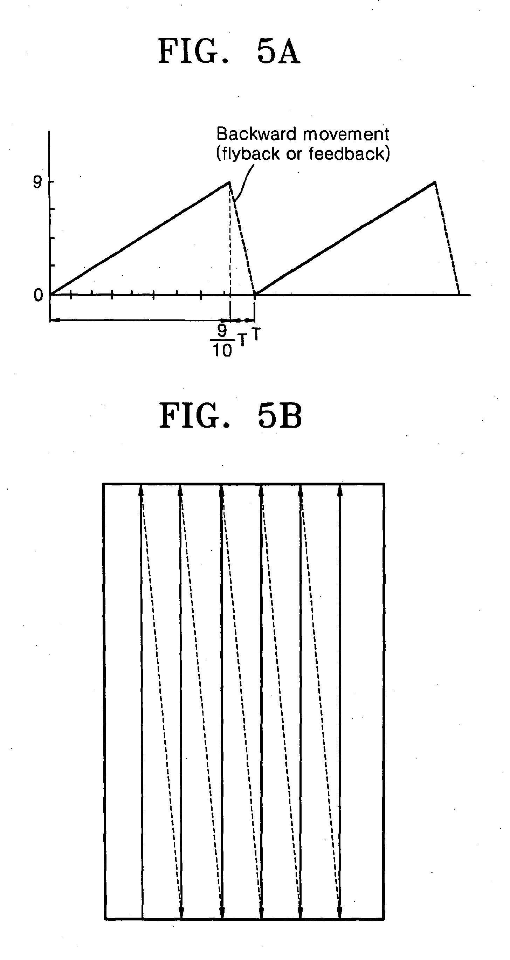

FIG. 5A is a graph illustrating an example of a vertical scanning signal applied across the optical scanner 34, and FIG. 5B shows a vertical scanning method performed by the optical scanner 34 according to the vertical scanning signal illustrated in FIG. 5A. Referring to FIGS. 5A and 5B, a vertical scanning signal is applied across the optical scanner 34 for a period T, and the optical scanner 34 seesaws back and forth between 0 and 9 degrees. First, when a vertical scanning signal is applied for a period of 9/10 T along a solid line as shown in FIG. 5A, the stage 41a is tilted from left (0 degree) to right (9 degrees) and a beam is scanned from top to bottom along a solid line onto a panel 37-1 as shown in FIG. 5B. Then, when a vertical scanning signal is applied for a return time of 1/10 T along a dotted line as shown in FIG. 5A, the stage 41 a returns from right (9 degrees) to left (0 degree) along a dotted line as shown in FIG. 5B. During this return time, no beam is applied through the illumination optical system 31. By repeatedly seesawing from left to right, the optical scanner 34 produces an image.

However, a seesaw motion performed by the optical scanner 34 is not efficient since the beam is not scanned onto the panel 37-1 during a return time. Thus, it is highly desirable to adopt a driving method according to which the beam is also scanned during a return time.

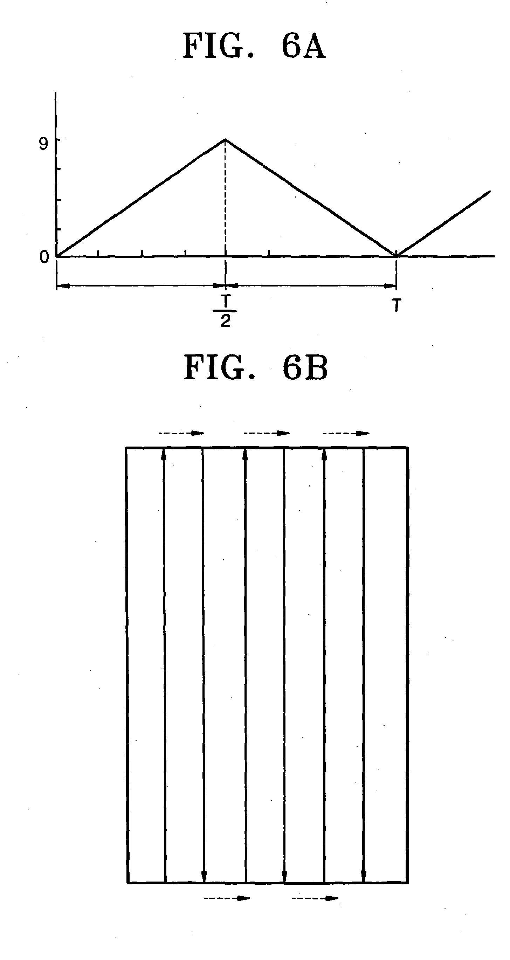

FIG. 6A is a graph illustrating another example of a vertical scanning signal applied across the optical scanner 34, and FIG. 6B shows a vertical scanning method performed by the optical scanner 34 according to the vertical scanning signal illustrated in FIG. 6A. Referring to FIGS. 6A and 6B, first, when a vertical scanning signal is applied across the optical scanner 34 for a period of 1/2 T along an ascending solid line as shown in FIG. 6A, the stage 41a is tilted from left (0 degree) to right (9 degrees) and a beam is scanned from top to bottom of the panel 37-1 as shown in FIG. 6B. Then, when a vertical scanning signal is applied during a return time of 1/2 T along a solid line in the graph as shown in FIG. 6A, the stage 41 a is tilted from right (9 degrees) to left (0 degree) and a beam is scanned from bottom to top of the panel 37-1 as shown in FIG. 6B. This approach has the advantage of overcoming restraints on driving speed of the optical scanner 34 by scanning the beam during a return time when no beam is not applied according to the method illustrated in FIG. 5A.

In the color image display apparatus according to the present invention, white light is separated into red, green, and blue beams and horizontally scanned onto the panel 37-1 by diffracting the white light at a different diffraction angle (?θ) at the hologram layer 41 formed on the stage 41 a according to the light wavelength while driving the optical scanner 34 according to the methods shown in FIGS. 5A and 6A. For example, the white light may be diffracted at diffraction angles having a difference of about 5 degrees for each wavelength.

The hologram layer 41 is formed as a reflective type hologram in which a hologram recorded as a result of interference of a reference beam and an object beam is reproduced by illuminating it with a reconstruction beam having the same incidence angle as the reference beam which is diffracted or reflected from the hologram. A diffraction grating layer having a large number of grooves or slits cut in a metal layer such as aluminum (Al) or plumbum (Pb) may be attached onto the stage 41 a in place of the hologram layer 41. However, examples of a spectrometer stacked on the stage 41 a are not limited to this and may include any device that can separate a color beam according to the wavelength of each color beam.

That is, the image display apparatus, according to the embodiment of the present invention, having a spectrometer on top of the optical scanner 34 can improve resolution and optical efficiency only with the panel 37-1 used as an optical modulator.

A beam emitted from the illumination optical system 31 is diffracted, reflected, and separated into different optical paths according to its wavelength by the spectrometer 33. Then, the separated beams are incident onto the relay lens system 35.

Referring back to FIG. 3, the relay lens system 35 comprises a collimator lens 35-1 that makes optical paths of the beams reflected from the optical scanner 34 at different angles parallel to an optical axis 38, first and second fly lenses 35-2 and 35-3 that make each color beam passing through the collimator lens 35-1 correspond on an one-to-one basis over the entire surface of the panel 37-1, and first and second field lenses 35-4 and 35-5 that convert the beams passing through the first and second fly lenses 35-2 and 35-3 into parallel beams and propagate the parallel beam to the panel 37-1. Here, two lenslets 30a and 30b are respectively arranged on the surfaces of the first and second fly lenses 35-2 and 35-3 and two lenslets per one scanner are prepared.

The collimator lens 35-1, located a focal length away from the center of the optical scanner 34, makes each color beam incident at a predetermined angle parallel with respect to the optical axis 38. The beams sequentially passing through the collimator lens 35-1, the first and second focusing lenses 35-2 and 35-3, and the first and second field lenses 35-4 and 35-5 are incident onto the image optical system 37, which in turn performs optical modulation on the beams to produce an image.

As shown in FIG. 3, the image optical system 37 consists of a panel 37-1, which modulates the beams passing through the relay lens system 35 according to an image signal and produces an image, and an optical path splitting unit 37-2, disposed between optical paths of the relay lens system 35 and the panel 37-1, to direct the beam coming from the relay lens system 35 to the panel 37-1 while directing the beam reflected off the panel 37-1 to the projection optical system 39. Here, a DMD device and a TIR prism may be used for the panel 37-1 and the optical path splitting unit 37-2, respectively. Alternatively, a liquid crystal on silicon (LCOS) and a polarization beam splitter (PBS) may be used for the same purpose.

The projection optical system 39 has a projection lens 36 that illuminates a screen (not shown) with the beams reflected from the panel 37-1 and emitted through the optical path splitting unit 37-2 and reconstructs the image produced by the panel 37-1.

A process for reconstructing an image will now be described. A beam emitted from the illumination optical system 31 is reflected, diffracted at different diffraction angles, and separated into different color beams according to its wavelength by the spectrometer 33. The separated color beams are converted into a parallel beam after passing through the relay lens system 35 and incident onto the image optical system 37. The image optical system 37 modulates each incident color beam and directs the resultant beam to the projection optical system 39, and the projection optical system 39 projects the produced image onto the screen and enlarges the image.

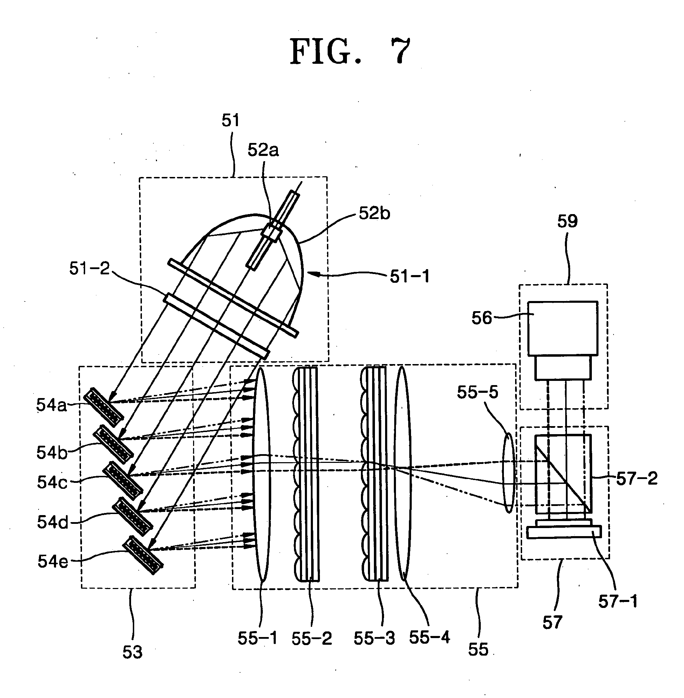

FIG. 7 shows the configuration of a color image display apparatus according to a second embodiment of the present invention. Referring to FIG. 7, the color image display apparatus includes an illumination optical system 51 to emit white light, a spectrometer 53 having a plurality of optical scanners 54a - 54e arranged in an array so as to form an area over which the white light is emitted, a relay lens system 55 that converts each color beam reflected, diffracted and separated by the spectrometer 53 into a parallel beam, an image optical system 57 that modulates the beam passing through the relay lens system 55 and produces an image, and a projection optical system 59 that projects the beam emitted from the image optical system 57 onto a screen (not shown) and reconstructs the image.

The illumination optical system 51 consists of an arc lamp 51-1 as a lamp type light source to emit white light. The arc lamp 51-1 is configured to have a light-emitting source 52a at the center surrounded by an arc-shaped reflector 52b so that a beam emitted from the light-emitting source 52a may be directed as parallel beams or reflected by the reflector 52b to produce parallel beams. A predetermined optical element 51-2 may be further provided in front of the arc lamp 51-1 for converting the incident beam into uniform parallel beams. A focusing lens array, a collimating lens, etc. may be used as the predetermined optical element 51-2.

The spectrometer 53 separates the beams according to their wavelength while repeatedly seesawing back and forth with a predetermined angle by sequentially driving the plurality of optical scanners 54a - 54e according to an applied vertical synchronization signal. The optical scanners 54a - 54e are the same as the optical scanner 34 in the color image display apparatus according to a previous embodiment of the present invention in terms of configuration and driving method using a vertical scanning signal, and thus a detailed description thereof will be omitted.

The only difference lies in the way of driving the optical scanners. That is, in the color image display apparatus according to this embodiment, vertical scanning signals driving the optical scanners 54a-54e are applied sequentially.

The relay lens system 55 consists of a collimating lens 55-1, first and second fly lenses 55-2 and 55-3, and first and second field lenses 55-4 and 55-5. These lenses have the same function as those in the relay lens system 35 according to a previous embodiment of the present invention. The difference is that ten lenslets 50a are respectively arranged on the first and second focusing lenses 55-4 or 55-5 since two outlets 50a are provided for each of the optical scanners 54a-54e. That is, the number of lenslets 50a is twice as much as the number of optical scanners 54a-54e. Thus, as the number of optical scanners increases, the number of lenslets 50a may increase twice as much as the number of scanners.

The image optical system 57 consists of a panel 57-1 that modulates the incident beam and produces an image and an optical path splitting unit 57-2 that separates the incident beam from the exit beam. The projection lens system 59 consists of a projection lens 56. The panel 57-1, optical path splitting unit 57-2, and the projection lens 56 have the same functions as described in the color image display apparatus according to a previous embodiment of the present invention.

As described above, the single-panel color image display apparatus according to an embodiment of the present invention is constructed to have a beam separation layer such as a hologram layer separates a beam on the surface of an optical scanner that repeatedly seesaws back and forth with a predetermined angle. The hologram layer acts to reflect and diffract the white light at a different diffraction angle according to each wavelength so that each resultant beam corresponds on a one-to-one basis to each horizontal scanning line of a panel, thus providing a high brightness and high resolution image using a single panel. Thus, the image display apparatus according to the present invention has the advantage of low manufacturing cost and compact structure.

While this invention has been particularly shown and described with reference to preferred embodiments thereof, it should not be construed as being limited to the embodiments set forth herein. For example, it will be understood by those skilled in the art that various kinds of spectrometers may be adopted based on the spirit and scope of this invention. Thus, the scope of this invention should be defined by the appended claims, not by the preferred embodiments described above.

## Claims

1. An image display apparatus comprising:
an illumination optical system (31, 53) to emit a beam;
a spectrometer (33) that separates the beam emitted from the illumination optical system (31) by reflecting and diffracting the beam at different diffraction angles according to a wavelength of the beam while seesawing back and forth for a predetermined angle with respect to a rotational axis;
a relay lens system (35) that converts beams separated by the spectrometer (33) into parallel beams;
an image optical system (37) that produces an image from the beams incident thereon from the relay lens system (35); and
a projection optical system (39) that projects the beams reflected by the image optical system (37) onto a screen.

2. The apparatus of claim 1, wherein the spectrometer (33, 53) is an optical scanner (34) that reflects and diffracts the beam coming from the illumination optical system (31) according to the wavelength of the beam.

3. The apparatus of claim 1 or 2, wherein the spectrometer (53) comprises a plurality of optical scanners (54a - 54e) arranged in an array and sequentially driven by a vertical synchronization signal.

4. The apparatus of claim 2 or 3, wherein the optical scanner (34, 54a - 54e) has on its surface a hologram layer (41) that separates the beam coming from the illumination optical system (31) by reflecting and diffracting the beam according to the wavelength of the beam.

5. The apparatus of claim 4, wherein the hologram layer (41) is a reflective type hologram layer.

6. The apparatus of claim 2 or 3, wherein the optical scanner (34, 54a - 54e) has on its surface a diffraction grating layer that separates the beam incident from the illumination optical system (31) by reflecting and diffracting the beam according to a wavelength of the beam.

7. The apparatus of one of the claims 1 to 6, wherein the illumination optical system (31) does not emit any beam during a return time when the spectrometer (33) is returning to its original position.

8. The apparatus of claim 7, wherein the spectrometer (33) returns to its original position approximately in one-tenth of a period T.

9. The apparatus of claim 4, wherein the spectrometer (33) returns to its original position approximately in one-half of a period T.

10. The apparatus of one of the claims 1 to 9, wherein the illumination optical system (31) comprises:
a plurality of light sources (31-1) to emit a plurality of color beams including red, green, and blue beams;
a color filter (31-2) disposed in front of the plurality of light sources (31-1) to make the plurality of color beams propagate along a common axis in order to produce white light; and
a condensing lens (31-3) that converges the white light onto the spectrometer (33).

11. The apparatus of claim 10, wherein each of the plurality of light sources (31-1) is a light-emitting diode (LED).

12. The apparatus of claim 10, wherein each of the plurality of light sources (31-1) is an arc lamp.

13. The apparatus of one of the claims 1 to 12, wherein the relay lens system (35) comprises:
a collimator lens (35-1) that makes beams reflected from the spectrometer (33) parallel to an optical axis;
a fly lens (35-2, 35-3) that makes the beams passing through the collimating lens (35-1) corresponds on a one-to-one basis to the image optical system (37); and
a field lens (35-4, 35-5) that converts the beams passing through the fly lens (35-2, 35-3) into collimated beams.

14. The apparatus of claim 13, wherein the fly lens (35-2, 35-3) has two lenslets provided for each optical scanner (34, 54a - 54e).

15. The apparatus of one of the claims 1 to 14, wherein the image optical system (37) comprises:
a panel (37-1) that modulates the beam passing through the relay lens system (35) and produces an image; and
an optical path splitting unit (37-2) disposed between optical paths of the relay lens system (35) and the panel (37-1) for directing the beam coming from the relay lens system (35) to the panel (37-1) while directing the beam reflected off the panel (37-1) to the projection optical system (39).
